# EUROPÄISCHE PATENTSCHRIFT

(11) **EP 0 387 427 B1**
(45) Veröffentlichungstag und Bekanntmachung des Hinweises auf die Patenterteilung: **04.08.1993**
(21) Anmeldenummer: 89250054.7
(22) Anmeldetag: 06.10.1989
(51) Int. Cl.: B65G 47/38

(54) **Kipp-Förderelement für einen Stückgutförderer**
Tilting-tray conveyor for articles
Convoyeur à plateaux basculants pour des objets

(30) Priorität: 16.03.1989 DE 3908632
(43) Veröffentlichungstag der Anmeldung: 19.09.1990
(73) Patentinhaber: Bernhard Beumer Maschinenfabrik KG, D-59269 Beckum (DE)
(72) Erfinder: Pölling, Ludger, D-4724 Wadersloh Diestedde (DE)
(74) Vertreter: Hoormann, Walter, Dr.-Ing.

(56) Entgegenhaltungen:
- EP-A- 0 230 919
- WO-A-81/01999

## Beschreibung

Die Erfindung betrifft ein Kipp-Förderelement für einen Stückgutförderer, dessen angetriebener Förderstrang aus einer Vielzahl von gelenkig miteinander verbundenen Förderelementen besteht, auf deren im Förderzustand im wesentlichen horizontaler Tragfläche jeweils wenigstens ein Stückgutteil anzuordnen ist, welches durch Kippen der Tragfläche wahlweise an einer von mehreren längs der Förderstrecke vorgesehenen Abgabestationen seitlich zur Förderrichtung abzugeben ist, mit einem die Tragfläche aufweisenden Tragelement, welches über eine Stützeinrichtung an einem längs einer Führung beweglichen Stützteil abgestützt ist, wobei das Tragelement mit einem fest an seiner Unterseite angeordneten, schräg nach unten gerichteten, drehbar gelagerten Lagerzapfen versehen und beim Kippen um die Längsachse des Lagerzapfens drehbar ist, der an einem Kippelement gelagert ist, welches seinerseits außerdem an einem von dem Stützteil hochstehenden Stützelement gelagert ist, dessen Längsachse abgewinkelt zur Längsachse des Lagerzapfens verläuft, und der beim Kippen des Tragelementes relativ zu dem Stützelement gesteuert schwenkbar ist.

Einem derartigen zum Sortieren von Stückgutteilen dienenden und demgemäß auch kurz als "Sorter" bezeichneten Stückgutförderer werden die Stückgutteile an wenigstens einer Aufgabestelle (häufig jedoch auch an mehreren Aufgabestellen) so aufgegeben, daß sie jeweils auf der im Förderzustand im wesentlichen horizontalen Tragfläche eines (Kipp-)Förderelementes plaziert werden.

Wenn vor- oder nachstehend davon die Rede ist, daß die Tragfläche des Förderelementes im Förderzustand "im wesentlichen horizontal" ist, so soll dieses auch beinhalten, daß die Tragfläche ggf. auch schalenförmig gekrümmt oder abgewinkelt ausgebildet sein kann.

Der Förderstrang eines derartigen Stückgutförderers kann entweder nur in einer horizontalen Ebene verlaufen, oder aber auch zumindest abschnittweise schräg zur Horizontalen bzw. raumgängig, wobei in derartigen Fällen selbstverständlich dafür Sorge zu tragen ist, daß die Stückgutteile nicht unbeabsichtigt von den Tragflächen heruntergleiten.

Die wesentliche Aufgabe eines derartigen Sorters besteht darin, die Stückgutteile jeweils an einer von mehreren seitlich zur Förderbahn angeordneten Abgabestationen abzugeben, um sie nach bestimmten Kriterien zu sortieren. Dieses kann z.B. bei Postpaketen bspw. eine Sortierung nach Postleitzahlen sein oder bei einem auf einem Flughafen eingesetzten Sorter eine Sortierung von aufgegebenen Gepäckstücken nach dem Flugziel. Dabei werden die Stückgutteile i.a. vor ihrer Aufgabe auf den Sorter mit einer Kodierung versehen oder sie weisen von vornherein eine Kennung bzw. eine Kennzeichnung auf, die von einer Leseeinrichtung lesbar ist, wobei die Kodierung bzw. Kennzeichnung im Bereich des Sorters einer bestimmten Abgabestation zugeordnet ist, und durch bestimmte Einrichtung dafür gesorgt wird, daß ein einer bestimmten Abgabestation zugeordnetes Stückgutteil an der Abgabestation (seitlich) von dem Sorter abgegeben wird und an der betreffenden Abgabestelle (i.a. über eine Rutsche) auf einen Förderer mit quer zur dortigen Förderrichtung des Sorters verlaufenden Förderrichtung gelangt, von dem es sodann zur Weiterbearbeitung fortgefördert wird.

Um die gewünschte Abgabe eines Stückgutteils an einer bestimmten Abgabestation zu verwirklichen, wäre es ersichtlich grundsätzlich zunächst einmal möglich, ein Stückgutteil jeweils mit einem im wesentlichen quer zur Förderrichtung des Sorters verlaufenden, hydraulisch oder pneumatisch betriebenen Stempel od.dgl. von der (dabei im wesentlichen horizontal verbleibenden) Tragfläche des betreffenden Förderelementes seitlich abzuschieben. Eine solche Arbeitsweise ist jedoch insbesondere bei den heutzutage verwirklichten hohen Fördergeschwindigkeiten von Sortern, die bis zu 2 m/sec. und mehr betragen, schon deshalb unbefriedigend, weil das Stückgut bei einer solchen Manipulation außerordentlich stark beansprucht wird. Eine möglichst schonende Behandlung des Stückgutes wird jedoch praktisch für alle Einsatzfälle von Sortern in höchstem Maße gewünscht.

Es sind daher auch bereits Förderelemente für derartige Stückgutförderer entwickelt worden, bei denen die Tragfläche an einer Abgabestation um eine in Förderrichtung verlaufende, symmetrisch zur Tragfläche angeordnete Schwenkachse seitlich zu kippen ist, wobei eine mittige Anordnung der Schwenkachse zur Tragfläche gewählt wird, weil i.a. bei einem derartigen Sorter die Abgabestellen sowohl links als auch rechts zur Förderbahn angeordnet sind, so daß das Stückgut demgemäß (in Förderrichtung gesehen) wahlweise nach links oder nach rechts abgegeben werden kann.

Diese vorbekannte Ausbildung hat sich jedoch noch als unbefriedigend erwiesen. Zunächst einmal hat es sich gezeigt, daß die Stückgutteile in zahlreichen Anwendungsfällen - insbesondere wenn sie entgegen der Abgabeseite seitlich versetzt auf der Tragfläche angeordnet sind - beim Kippen zum Überschlagen neigen, was für eine definierte und insbesondere schonende Abgabe höchst unerwünscht ist.

Es kommt hinzu, daß bei einem seitlichen Abkippen der Tragfläche in der vorstehend beschriebenen Weise ein längliches Stückgutteil, welches i.a. in seiner Längsrichtung auf ein Förderelement aufgelegt wird, so von dem Sorter abgegeben wird, daß seine lange Längsseite vorn liegt, so daß die Aufnahme- bzw. Überführungseinrichtungen entsprechend breit ausgebildet sein bzw. mit entsprechenden Umlenkeinrichtungen versehen sein müssen, was wiederum nicht zu einer schonenden Stückgutbehandlung und i.ü. zu einem entsprechend großen Investitionsaufwand führt.

Um die vorstehend beschriebenen Förderelemente weiter zu verbessern, sind auch bereits Förderelemente bekanntgeworden, bei denen die in Förderrichtung verlaufende Schwenkachse zum Abkippen der Tragfläche zur Längssymmetrieachse der Tragfläche seitlich versetzt ist. Ein solcher Versatz ist jedoch i.a. - insbesondere bei verhältnismäßig großen Tragflächen - nicht derart zu realisieren, daß die Schwenkachse im wesentlichen im Bereich eines seitlichen Längsrandes des Tragelementes liegt und demgemäß die im Förderzustand horizontale Tragfläche bei einem seitlichen Abkippen im wesentlichen nur nach unten abgesenkt wird, sondern es ist nur ein relativ geringer Versatz der Schwenkachse zur Längssymmetrieachse ausführbar, wodurch die Gefahr eines Überschlagens ("Trudelns") des betreffenden Stückgutteils nicht ausreichend zu verringern ist.

Da jedoch die Tragfläche eines hier in Rede stehenden Förderelementes aus den oben bereits erwähnten Gründen in aller Regel wahlweise nach links oder nach rechts kippbar sein muß, erfordert eine derartige Ausgestaltung zum Umschalten von der einen Schwenkachse auf die andere Schwenkachse zudem einen erheblichen Aufwand, der nicht nur mit entsprechenden Kosten verbunden ist, sondern aufgrund der relativ komplizierten Mechanik entsprechend störanfällig ist. I.ü. werden auch bei diesem bekannten Förderelement längliche Stückgutteile so vom Sorter abgegeben, daß ihre lange Längsseite vorn liegt, so daß insoweit auch die oben bereits erörterten Nachteile vorliegen und i.ü. keine sehr schonende Stückgutbehandlung zu erzielen ist.

Aus der WO 81/01 999 ist ein Förderelement bekannt, dessen Tragfläche beim Kippen zugleich begrenzt gedreht wird, so daß ein in Längsrichtung auf einem Tragelement angeordnetes, längliches Stückgutteil in zweckmäßiger Weise eine gewisse Drehung erfährt. Zu diesem Zweck ist der sich schräg vom Tragelement nach unten erstreckende Lagerzapfen in einem ortsfesten Lager gelagert, dessen Lagergehäuse fest mit dem Stützteil des Förderelementes verbunden ist, so daß beim Kippvorgang eine gewisse Drehung der Tragfläche um die ortsfeste Längsachse des Lagerzapfens möglich ist, wobei mithin der von der Längsachse durchdrungene Punkt der Tragfläche ortsfest verbleibt.

Obwohl der Abgabevorgang mit den aus dieser Druckschrift bekannten Förderelementen gegenüber dem zuvor beschriebenen Stand der Technik verbessert ist, ist er im Hinblick auf eine schonende Behandlung insbesondere von länglichen Stückgutteilen, die in Förderrichtung auf den Förderelementen liegen, noch nicht annähernd optimal, da die einem Stückgutteil beim Abkippen erteilte Drehbewegung sehr begrenzt ist und wie bei dem zuvor beschriebenen Stand der Technik ausschließlich durch Schwerkraftwirkung erfolgt.

Aus der DE-PS 36 02 861 ist ein gegenüber dem zuvor bekanntgewesenen Stand der Technik erheblich verbessertes gattungsgemäßes Förderelement bekanntgeworden, bei dem eine äußerst schonende Abgabe der Stückgutteile gewährleistet ist, wobei einem abzugebenden Stückgutteil jeweils beim Abgabevorgang über die Schwerkkraftwirkung hinaus noch ein für eine schonende Abgabe zweckmäßiger Bewegungsablauf eingeprägt wird, was gegenüber dem zuvor beschriebenen vorbekannten Kipp-Förderelment im wesentlichen dadurch erreicht wird, daß der Lagerzapfen beim Kippen des Tragelementes relativ zu dem Stützelement gesteuert schwenkbar ist, wobei darüber hinaus bevorzugt die Längsachse des Stützelementes im Förderzustand des Tragelementes bzgl. einer zwischen dem Tragelement einerseits und dem Stützteil andererseits verlaufenden, horizontalen Bezugsebene spiegelsymmetrisch zur Längsachse des Lagerzapfens verläuft und das beim Kipp-Förderelement gemäß der DE-PS 36 02 861 zapfenförmig ausgebildete Stützelement fest mit dem Stützteil verbunden ist.

Darüber hinaus ist bei dem aus der DE-PS 36 02 861 bekannten Kipp-Förderelement - ebenso wie bei dem aus der WO 81/01 999 bekannten Kipp-Förderelement - der fest an der Unterseite des Tragelementes angeordnete, schräg nach unten gerichtete, drehbar gelagerte Lagerzapfen mit dem zapfenförmig ausgebildeten Stützelement durch ein Kardangelenk verbunden, wobei die rechtwinklig zur Längsachse des zapfenförmigen Stützelementes verlaufende eine Drehachse des Kardangelenkes in derjenigen Vertikalebene verläuft, in welcher die Längsachsen des Lagerzapfens und des zapfenförmigen Stützelementes im Förderzustand verlaufen.

Das aus der DE-PS 36 02 861 bekannte Kipp-Förderelement, welches sich von dem zuvor bekanntgewordenen Stand der Technik sowohl hinsichtlich seiner Konstruktion als auch bzgl. seiner Funktionsweise ganz gravierend unterscheidet, hat sich in der Praxis bzgl. seiner Funktionsweise zwar kaum noch als verbesserungsbedürftig erwiesen, jedoch in fertigungstechnischer Hinsicht insbesondere im Hinblick auf das zwischen dem Lagerzapfen einerseits und dem zapfenförmigen Stützelement andererseits angeordnete Kardangelenk ganz erhebliche Schwierigkeiten bereitet, die systemimmanent und demgemäß nicht auszuräumen sind. Diese Schwierigkeiten liegen - ganz abgesehen von den ganz erheblichen Kosten des Kardangelenkes, die etwa 50 %(!) der Gesamtkosten des gesamten Kipp-Förderelementes ausmachen - insbesondere in den zu fordernden Toleranzen (und dabei nicht zuletzt wiederum den hiermit verbundenen Fertigungskosten). Hält man nämlich die Toleranz bei der Ausbildung gemäß der DE-PS 36 02 861 in einem für derartige maschinelle Einrichtungen üblichen Ausmaß bzw. Bereich und kommt dabei schon zu einem erheblichen Kostenaufwand, so "addieren" sich diese Toleranzen vom Bereich des etwa mittig im Kipp-Förderelementes angeordneten Kardangelenk zum Förderelement bzw. dessen Tragfläche hin, so daß dieses, wenn man es bspw. mit den Händen anfaßt und "kippelnd" um seine Längs- oder/und Querachse bewegt, ein relativ großes Spiel aufweist, welches von den Anwendern selbst dann als unbefriedigend empfunden wird, wenn es unterhalb der Schwelle bzw. Grenze liegt, von der ab es sich in nachteiliger Wirkung auf die Funktionsweise des Sorters auswirkt. Es hat sich gezeigt, daß die tatsächlichen oder auch nur potentiellen Abnehmer derartiger Stückgutförderer (= Sorter) nicht oder nur äußerst zögernd bereit sind, eine Konstruktion zu akzeptieren, bei welcher sich die Förderelemente schon im unbeladenen Zustand von Hand mehr oder weniger in allen Richtungen "kippelnd" (wenngleich selbstverständlich begrenzt) bewegen lassen. Diese Einstellung beruht vermutlich auf der Befürchtung, daß ein Stückgutförderer, dessen Tragelemente sich bereits bei Betriebsaufnahme entsprechend verhalten, mehr oder weniger kurzfristig aufgrund des normalen, üblichen Verschleißes in einen Zustand übergehen, indem die einzelnen Förderelemente aufgrund eines befürchteten Ausschlagens ihrer Lagerung sich wie welke Blumen verhalten und jeweils ungewollt und unsystematisch schon während des Transportes seitlich (wenngleich auch nur leicht) abgekippt angeordnet sind, wobei man wohl letztlich befürchtet, daß dieses Verhalten im Verlauf einer relativ kurzen Betriebszeit so weit zunehmen könnte, daß es sich dann auch in nachteiliger Weise auf das Betriebsverhalten auswirkt, daß also Stückgutteile bereits vor der angesteuerten Abgabestelle seitlich von der Tragfläche herabgleiten.

Es kann dahingestellt bleiben, ob diese Befürchtungen tatsächlich in überschaubarer Betriebszeit eintreten oder nicht, da dieses Vorurteil praktisch sämtlichen potentiellen Verwendern eigen (und auch durchaus verständlich) ist.

Diese Skepsis ist zumindest dann häufig nicht unberechtigt, wenn die Tragflächen eines derartigen Sorters in den Betriebspausen als Laufsteg zweckentfremdet werden. Dieses ist z.B. dann der Fall, wenn das Bedienungs- bzw. Wartungspersonal oder sonstige Dritte die Tragflächen der Förderelemente besteigen (bspw. um über dem Förderer Lampen zu montieren oder Glühbirnen auszuwechseln),wie dieses trotz entsprechender Verhaltensmaßregeln in praxi insbesondere gegenüber Nicht-Betriebsangehörigen einfach nicht zu unterbinden ist. In solchen Fällen wird nämlich ein derartiges Kipp-Förderelement, welches bspw. für eine Maximalbelastung von maximal 20 oder 30 kg ausgelegt ist, plötzlich mit z.B. 90 kg oder mehr (also dem Drei-, Vier- oder Mehrfachen) belastet, und es kann dann tatsächlich aufgrund dieser Überbelastungen zu einem noch größeren Spiel im Bereich der Tragfläche kommen.

In diesem Zusammenhang sei wegen der ganz erheblichen Bedeutung nochmals darauf verwiesen, daß nicht zuletzt auch kostenmäßige Gesichtspunkte hierbei eine ganz erhebliche Rolle spielen, da Kardangelenke, wie sie bei den Kipp-Förderelementen gemäß der WO 81/01 999 bzw. der DE-PS 36 02 861 zu verwenden sind, relativ teure Baugruppen sind, die im Rahmen der Gesamtkosten eines derartigen Kipp-Förderelementes mit einem Anteil von bis zu 50 % und mehr ersichtlich eine gewaltige Rolle spielen, insbesondere wenn man bedenkt, daß bei einem größeren Sorter in aller Regel wenigstens hunderte derartiger Kipp-Förderelemente zum Einsatz kommen.

Der vorliegenden Erfindung liegt demgemäß die Aufgabe zugrunde, das aus der DE-PS 36 02 861 bekannte Kipp-Förderelement der eingangs beschriebenen Gattung unter Vermeidung seiner Nachteile insbesondere dahingehend zu verbessern, daß man unter Aufrechterhaltung der oben angedeuteten, mit dem aus der DE-PS 36 02 861 gegenüber dem diesbezüglich vorbekannten Stand der Technik erzielten Vorteile die oben beschriebenen Nachteile vermeidet und dabei nicht nur zu einer ganz erheblich billigeren sondern darüber hinaus auch noch funktionsmäßig zweckmäßigeren Lösung kommt, deren wesentliche Kriterien sich möglichst - insbesondere zwecks Anpassung an die jeweiligen Gegebenheiten bzw. Erfordernisse des Einzelfalles - möglichst noch variieren zu lassen, ohne das Basiskonzept zu verlassen.

Die Lösung dieser Aufgabe besteht erfindungsgemäß darin, daß die einander zugekehrten Endabschnitte des Lagerzapfens einerseits und des Stützteils bzw. des von diesem in Richtung auf die Tragfläche hochstehenden Stützelement andererseits (unter Verzicht auf ein diese beiden Bauteile beim Stand der Technik verbesserndes Kardangelenkt od.dgl.) nur über das Kippelement miteinander verbunden sind.

In bevorzugter Ausgestaltung der vorliegenden Erfindung weist das längs einer (i.a. schienenförmig ausgebildeten) Führung bewegliche Stützteil bei dem erfindungsgemäßen Kipp-Förderelement (statt des beim Gegenstand der DE-PS 36 02 861 vorhandenen Stützzapfens) eine Stützbuchse auf, welche den unteren Endabschnitt des Kippelementes konzentrisch umgibt, wie weiter unten noch im einzelnen erläutert werden wird.

Gemäß einer höchst bevorzugten Ausgestaltung der vorliegenden Erfindung kann das Stützteil in seitlicher Draufsicht (also gleichsam quer zur vertikalen Symmetrieebene des Kipp-Förderelementes gesehen) im wesentlichen in Form eines (gedrehten) E ausgebildet sein, wobei der Mittelschenkel des Stützteils die Lagerstelle für den unteren Endabschnitt des Kippelementes bilden kann und die beiden Außenschenkel des E-förmigen Stützteils jeweils (gelenkig) mit dem Tragelement verbunden sein können. Diese höchst bevorzugte Ausgestaltung hat sich im Rahmen der extensiven Entwicklungsarbeiten insbesondere für eine Ausgestaltung als höchst zweckmäßig erwiesen, bei welcher der die Lagerstelle für den unteren Endabschnitt des Kippelementes bildenden Mittelschenkel des Stützteils - wie vorstehend bereits dargelegt worden ist - als Stützbuchse ausgebildet ist.

Die beiden Außenschenkel des Stützteils können bevorzugt zueinander fluchten, und die vertikale mittlere Symmetrieebene der beiden Außenschenkel des Stützteils liegt dabei zweckmäßigerweise in der in Förderichtung verlaufenden, vertikalen Symmetrieebene des erfindungsgemäßen Kipp-Förderelementes.

Weitere bevorzugte Ausgestaltungen der vorliegenden Erfindung sind in den Unteransprüchen beschrieben.

Die Erfindung ist nachstehend an Ausführungsbeispielen unter Bezugnahme auf eine Zeichnung weiter erläutert. Es zeigt:
- Fig. 1: eine stark schematisierte Darstellung eines Teilabschnittes eines Förderstranges eines Stückgutförderers mit Kipp-Förderelementen in Seitenansicht;
- Fig. 2: eine teilweise Draufsicht auf die Darstellung gemäß Fig. 1;
- Fig. 3: eine etwas vereinfachte Seitenansicht eines erfindungsgemäßen Kipp-Förderelementes;
- Fig. 4: das Kipp-Förderelement gemäß Fig. 3 in einem durch die vertikale mittlere Symmetrieebene verlaufenden Schnitt;
- Fig. 5: eine vereinfachte Teildarstellung eines Kipp-Förderelementes im Förderzustand; und
- Fig. 6: eine Fig. 5 entsprechende Darstellung, in welcher sich das Tragelement des Kipp-Förderelementes in Abgabestellung bewegt hat.

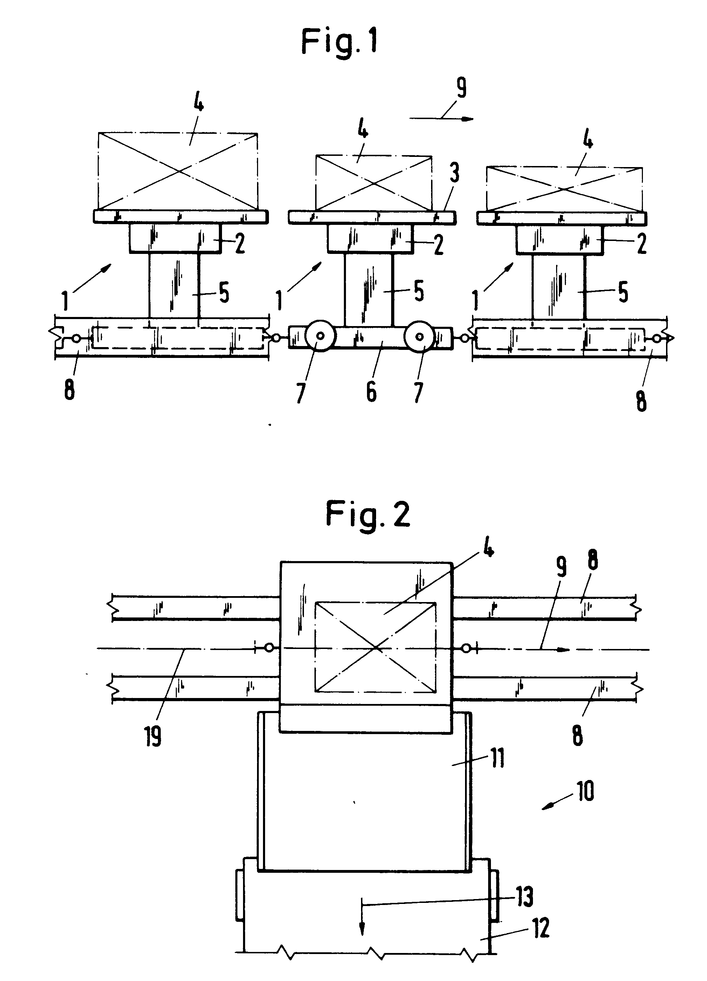

Die Fig. 1 und 2 zeigen in einer stark schematisierten Darstellung einen Teil eines als Sorter vorgesehenen Stückgutförderers. Der Sorter besteht aus einer Vielzahl von Förderelementen 1, die jeweils gelenkig miteinander verbunden sind und einen endlosen Förderstrang bilden, welcher in einer horizontalen Ebene umläuft, jedoch auch raumgängig verlaufen könnte. Die Förderelemente 1 bestehen jeweils im wesentlichen aus einem Tragelement 2, welches an seiner Oberseite die Tragfläche 3 für ein Stückgutteil 4 bildet bzw. aufweist und über eine im ganzen mit 5 bezeichnete Stützeinrichtung an einem Stützteil 6 abgestützt ist, welches mit Laufrollen 7 an einer Führung 8 verfahrbar ist, die als Doppelschiene ausgebildet ist (s. Fig. 2) und in Förderrichtung 9 verläuft.

Die Stückgutteile 4 sind jeweils an mehreren in der Zeichnung nicht dargestellten Aufgabestellen auf die Tragflächen 3 der Kipp-Förderelemente 1 aufzugeben und durch Schrägstellung (= Kippen) der im Förderzustand horizontalen Tragfläche 3 wahlweise an einer von mehreren längs der Förderstrecke vorgesehenen Abgabestationen seitlich zur Förderrichtung 9 abzugeben.

Eine derartige Abgabestation 10 ist in Fig. 2 schematisch dargestellt. Sie enthält außer Einrichtungen, mittels derer eine Abgabe eines von einem bestimmten Kipp-Förderelement 1 zugeförderten Stückgutteils 4 auszulösen ist, eine schräg zur Horizontalen verlaufende Rutsche 11, die so angeordnet ist, daß ein abzugebendes Stückgutteil 4 beim Heruntergleiten von der Tragfläche 3 des betreffenden Kipp-Förderelementes 1 auf die Rutsche 11 gelangt und von dieser auf einen Förderer 12 der Abgabestation 10 aufgegeben wird, welcher das betreffende Stückgutteil 4 gemäß dem Pfeil 13 quer zur Förderrichtung (Pfeil 9) abfördert.

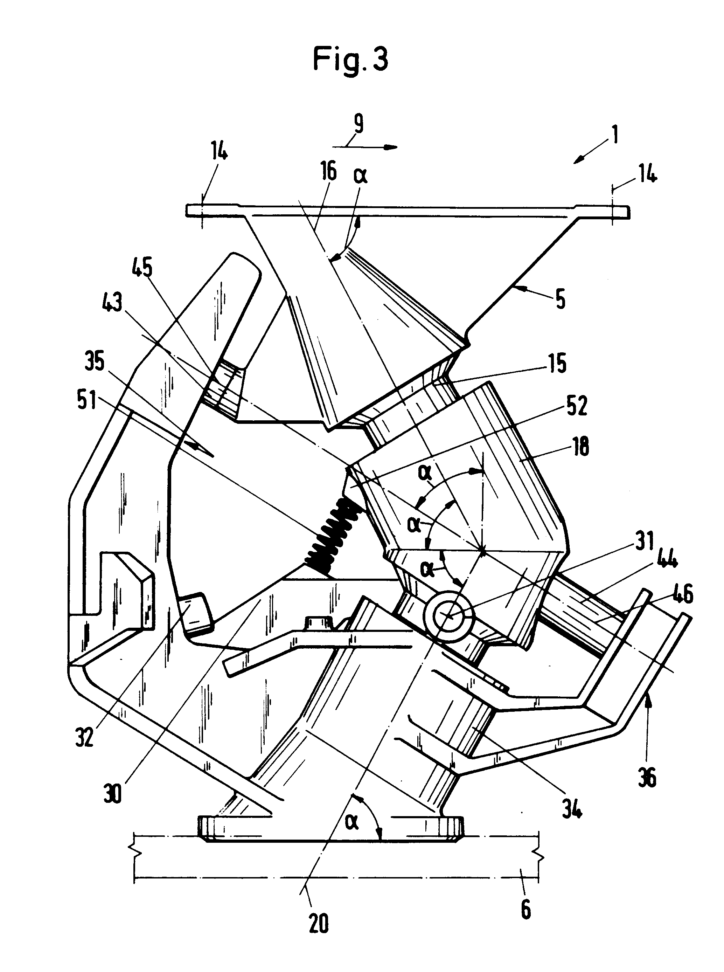

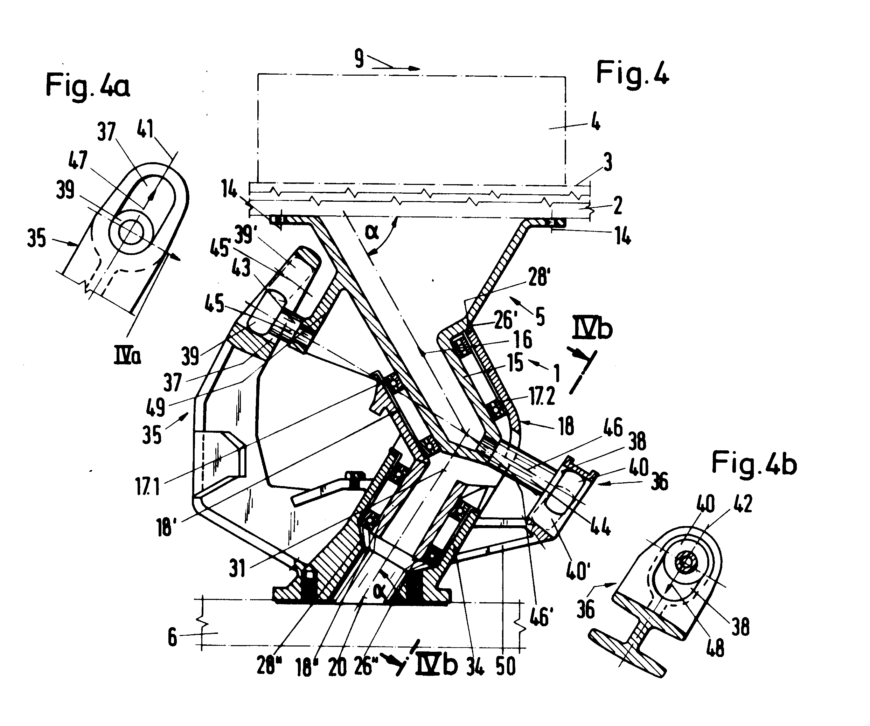

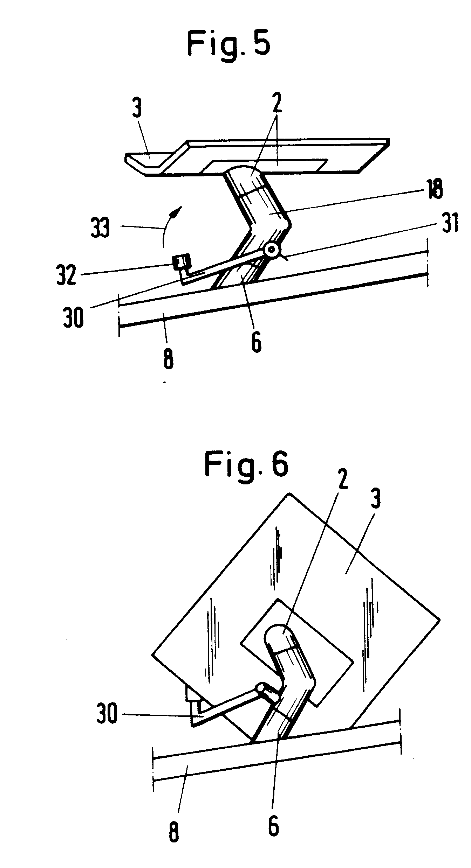

Die Fig. 3 und 4 zeigen in einer gegenüber den Fig. 1 und 2 (wie auch den weiter unten erörterten Fig. 5 und 6) erheblich vergrößerten seitlichen (Teil-)Ansicht ein Kipp-Förderelement 1, dessen Tragelement 2 mit Verbindungsmitteln 14 (wie z.B. Schrauben), von denen nur die Mittellinien dargestellt und mit dem Bezugszeichen 14 bezeichnet sind, mit der Tragfläche 3 zum Abstützen eines Stückgutteils 4 verbunden sind. Von der Unterseite des Tragelementes 2 erstreckt sich ein Lagerzapfen 15 des Kipp-Förderelementes 1 schräg nach unten, dessen Längsachse mit 16 bezeichnet ist. Das fest mit der Tragfläche 3 verbundene Tragelement 2 ist in einer weiter unten noch im einzelnen beschriebenen Weise mittels des Lagerzapfens 15 relativ zum Stützteil 6 um die Längsachse 16 des Lagerzapfens 15 drehbar gelagert, und zwar mittels zweier Lager 17.1 und 17.2, bei denen es sich im vorliegenden Falle um Kugellager handelt, deren Innenring fest am Lagerzapfen 15 befestigt ist, und deren Außenring mit einem Bestandteil der Stützeinrichtung 5 seihenden Kippelement 18 verbunden ist, welches weiter unten noch im einzelnen beschrieben ist.

Die Längsachse 16 verläuft mit der in Förderrichtung 9 verlaufenden Symmetrieachse 19 (s. Fig. 2) des Tragelementes 2 bzw. dessen Tragfläche 3 in einer gemeinsamen Vertikalebene (nämlich in der mittleren vertikalen Symmetrieebene) und schließt mit dem in Förderrichtung 9 vorn liegenden Abschnitt der Tragfläche 3 einen spitzen Winkel α ein.

Der fest mit dem Tragelement 2 verbundene Lagerzapfen 15 des Kipp-Förderelementes 1 ist beim Kippen des Tragelementes 2 um ein zu seiner Längsachse 16 abgewinkelt angeordnetes, buchsenförmig ausgebildetes Stützelement (= Stützbuchse) 34 gesteuert schwenkbar, wie sich aus der weiteren Beschreibung noch im einzelnen ergibt. Die Längsachse 20 der Stützbuchse 34 verläuft im Förderzustand des Tragelementes 2 - also bei horizontaler Tragfläche 3 - in derselben (Ausgangs-)Ebene wie die Längsachse 16 des Lagerzapfens 15 und die Symmetrieachse 19 (s. Fig. 2) des Tragelementes 2. I.ü. verläuft die Längsachse 20 der Stützbuchse 34 im Förderzustand des Tragelementes 2 bzgl. einer zwischen dem Tragelement 2 und dem Stützteil 6 verlaufenden horizontalen Bezugsebene 21 spiegelsymmetrisch zur Längsachse 16 des Lagerzapfens 15, wobei mithin der Winkel α zur Horizontalen gleich groß ist und beim dargestellten Ausführungsbeispiel 60° beträgt.

Im Gegensatz zu der Ausgestaltung gemäß der DE-PS 36 02 861 ist der Lagerzapfen 15 des Kipp-Förderelementes 1 an seinem freien unteren Endabschnitt nicht (über ein Kreuz- bzw. Kardangelenk oder ggf. ein Kugelgelenk) an der fest mit dem Stützteil 6 verbundenen Stützbuchse 34 angelenkt, sondern mit dieser lediglich über das Kippelement 18 sowie mit größerem Abstand zur Längsachse 20 angeordnete Außenschenkel 35 und 36 des Stützteils 6 verbunden, die integral mit dem Stützteil 6 ausgebildet sind. Wie insbesondere aus den Fig. 3 und 4 erkennbar ist, ist nämlich das Stützteil 6 in seitlicher Draufsicht im wesentlichen in Form eines E ausgebildet, dessen geometrischer Steg um den Winkel α aus der Vertikalen gedreht ist, wobei der Winkel α derjenige (spitze) Winkel ist, unter dem die Längsachsen 15 und 20 jeweils spiegelsymmetrisch zur Horizontalen verlaufen. Dabei bildet der Mittelschenkel des E-förmigen Stützteils 6 die Stützbuchse 34 und damit die Lagerstelle für den unteren Endabschnitt 18" des Kippelementes 18, während die beiden Außenschenkel 35, 36 des E-förmigen Stützteils 6 jeweils beweglich mit dem Tragelement 2 verbunden sind.

Die beiden Außenschenkel 35, 36 des Stützteils 6 fluchten in einer Vertikalebene zueinander, und zwar in der vertikalen Symmetrieebene des Kipp-Förderelementes 1. Sie weisen jeweils an ihrem oberen Endabschnitt eine Ausnehmung 37 bzw. 38 auf (s. insbesondere Fig. 4a und 4b), in welcher jeweils ein Führungsnocken 39 bzw. 40 der Stützeinrichtung 5 bzw. des Tragelementes 2 geführt ist. Die Ausnehmungen 37, 38 der Außenschenkel 35, 36 sind als Langlöcher ausgebildet, deren Längsachse 41 bzw. 42 in der vertikalen Symmetrieebene liegt. Die Führungsnocken 39, 40 sind als Rollen mit jeweils einem elastischen Mantel ausgebildet, so daß bei einer Relativbewegung der Führungsnocken 39, 40 in den Ausnehmungen 37, 38 praktisch keine Geräusche entstehen und i.ü. auch die Toleranzfragen auf diese Weise wegen der Elastizität mühelos beherrscht sind.

Die mehr als Rollen ausgebildeten Führungsnocken 39, 40 sind jeweils an einem Führungsnockenhalter 43 bzw. 44 angeordnet, der mit der Stützeinrichtung 5 bzw. dem Tragelement 2 fest verbunden ist, wobei die die Mittelachse der Führungsnocken 39, 40 bildenden Achsen 45 bzw. 46 zueinander fluchten und die Führungsnockenachsen 45, 46 ersichtlich in der vertikalen Symmetrieebene liegen. Obwohl die Führungsnockenhalter 43, 44 funktionsmäßig zur Stützeinrichtung 5 bzw. dem Tragelement 2 gehören und demgemäß funktionsmäßig integral mit diesem ausgebildet sein könnten, sind sie, wie insbesondere aus Fig. 4 erkennbar ist, als Scheibe 43 bzw. Buchse 44 ausgebildet, um die Montage zu erleichtern bzw. überhaupt zu ermöglichen.

Aus den vorstehenden Ausführungen sowie insbesondere den Fig. 3 und 4 ergibt sich, daß das Kippelement 18 jeweils in Längsrichtung der Längsachsen 16 bzw. 20 (axial) unbeweglich ist, doch ist es selbstverständlich insgesamt drehbar, um die Kippbewegung an einer Abgabestation 10 einzuleiten und durchzuführen, wie dieses noch weiter erläutert werden wird.

Das Kippelement 18 ist erkennbar als V-förmiger Rohrkörper ausgebildet, dessen oberer Schenkel 18' konzentrisch zum Lagerzapfen 15 und damit dessen Längsachse 16 und dessen unterer Schenkel 18" konzentrisch zur Längsachse 20 der Stützbuchse 34 verläuft, diese aber nicht konzentrisch umgibt, wie dieses bei der Ausgestaltung gemäß der DE-PS 36 02 861 der Fall ist, sondern relativ zur Stützbuchse 34 gleichsam als Lagerzapfen wirkt, wie insbesondere der Darstellung im unteren Teil von Fig. 4 zu entnehmen ist.

Die beiden jeweils rechtwinklig zu der betreffenden Längsachse 16 bzw. 20 verlaufenden Stirnseiten 26' bzw. 26" des Kippelementes 18 liegen jeweils einer parallelen Fläche 28' bzw. 28" des Tragelementes 2 bzw. der Stützbuchse 34 gegenüber, wobei das Kippelement 18 mithin zum Tragelement 2 und auch zur Stützbuchse 34 zumindest im wesentlichen abgedichtet ist.

Das Kippelement 18 ist in dem in den Fig. 1 bis 5 dargestellten Förderzustand mittels eines in der Zeichnung nicht im einzelnen dargestellten Verriegelungsmittels gegen eine Drehung am Stützteil 6 verriegelt. Da sich das Kippelement 18 im verriegelten Zustand nicht um die Längsachse 20 der Stützbuchse 34 drehen kann, ist demgemäß auch das Tragelement 2 verriegelt.

Das in der Zeichnung nicht im einzelnen dargestellte Verriegelungsmittel des Kipp-Förderelementes 1 ist mittels eines an jeder Abgabestation 10 angeordneten, gesteuert zu betätigenden Entriegelungsmittels zu entriegeln. Eine derartige Entriegelung kann bspw. dadurch erfolgen, daß an dem Kippelement 18 gemäß den Fig. 5 und 6 ein Hebel 30 an einer Schwenkachse 31 angelenkt ist, der mit seinem seitlich vorstehenden freien Ende, an dem zweckmäßigerweise eine Rolle 32 angebracht sein kann, an derjenigen Abgabestation 10, an welcher das Förderelement 4 das von ihm transportierte Stückgutteil 4 abgeben soll, auf eine Rampe auffährt und um die Schwenkachse 31 in Richtung des Pfeiles 33 hochgeschwenkt wird, wodurch von dem Hebel 30 auf das Verriegelungsmittel 29 eingewirkt und dieses entriegelt wird. Da das Kippförderelement 1 nach beiden Seiten entleerbar sein soll, ist selbstverständlich an jeder Seite ein entsprechender Hebel 30 angeordnet bzw. ein Bauteil vorgesehen, welches beiderseits der Förderstrecke an einer Abgabestation 10 zwecks Entriegelung des Entriegelungsmittels zu betätigen ist.

Bei dem an einer Abgabestation 10 initiierten Kippen, bei dem ein Steuerelement der Abgabestation 10 in geeigneter Weise auf die eine Rolle 32 des Hebels 30 einwirkt, daß dieser um die horizontal verlaufende Achse 31 geschwenkt, das Kippelement 18 entriegelt und gedreht wird, verändert sich die Stellung des in der i.a. schienenförmigen Führung 8 geführten Stützteils 6 relativ zur Führung 8 - abgesehen von der Vorwärtsbewegung in Förderrichtung 9 - ersichtlich nicht. Dagegen bewirkt ein Schwenken des Kippelementes 18 um die Längsachse 20 eine Dreh-Kipp-Bewegung des Tragelementes 2 und schwenkt dessen Tragfläche 3 bis in die in Fig. 6 schematisiert dargestellte Endstellung, wobei die Entleerungsendstellung gemäß Fig. 6 jedoch einer Betätigung des in den Fig. 5 und 6 nicht dargestellten, auf der anderen Seite des Kippelementes 18 angeordneten Hebels 30 an einer Abgabestation 10 entspricht, während eine Betätigung des in den Fig. 5 und 6 dargestellten Hebels 30 ein Drehkippen zur anderen Seite bewirken würde.

Bei dieser Dreh-Kipp-Bewegung des Trageelementes 2 bzw. dessen Tragfläche 3 aus der horizontalen Förderstellung gemäß den Fig. 1 bis 5 erfolgt eine Drehung der Tragfläche 3 um die Längsachse 16. Außerdem wird der Lagerzapfen 15 (und damit das Tragelement 2 mit seiner Tragfläche 3) relativ zu dem Stützelement 34 gesteuert geschwenkt, so daß sich insgesamt eine geometrisch etwas komplizierte Bewegung der ein Stückgutteil 4 abstützenden Tragfläche des Tragelementes 2 ergibt, bei welcher die Tragfläche 3 zur Abgabestelle hin in eine Schrägstellung gebracht wird, dabei jedoch gleichzeitig mittelpunktmäßig abgesenkt und während der Drehung nach vorn bewegt wird, so daß die Tragfläche 3 das Stückgutteil 4 bei der Abgabe zunächst noch unter Vermittlung einer entsprechenden Beschleunigung begleitet und das Stückgutteil 4 in extrem schonender Weise auf die nachgeschaltete Rutsche 11 (s. Fig. 2) übergeben wird.

Bei dieser über eine Rolle 32 und den Hebeln 30 auf das Kippelement 18 übertragenen und demgemäß vom Kippelement 18 dem Tragelement 2 eingeprägten Dreh-Kipp-Bewegung erfolgt überdies zugleich ein Schwenken der Achse 45-46 (s. Fig. 4) im Uhrzeigersinne, wobei der rollenförmige Führungsnocken 39 gemäß dem in Fig. 4a eingezeichneten Pfeil 47 in der als Langloch ausgebildeten Ausnehmung 37 des Außenschenkels 35 des Stützteils 6 schräg nach oben und in entsprechender Weise der Führungsnocken 40 in der ihm zugeordneten, ebenfalls als Langloch ausgebildeten Ausnehmung 38 des Außenschenkels 36 gemäß dem Pfeil 48 (s. Fig. 4 b) schräg nach unten bewegt wird.

Trotz des oben bereits (auch hinsichtlich der Gründe) erörterten Verzichtes einer antriebsmäßigen Verbindung zwischen dem Lagerzapfen 15 und der Stützbuchse 34 (über ein Kardangelenk od.dgl.) und der damit vermiedenen technischen Schwierigkeiten und wirtschaftlichen (nämlich kostenmäßigen) Nachteile ist mit der erfindungsgemäßen Ausbildung des Kipp-Förderelementes 1 nicht nur eine qualitativ grundsätzlich bereits mit dem Kipp-Förderelement gemäß der DE-PS 36 02 861 erreichte Dreh-Kipp-Bewegung der oben beschriebenen Art zu erreichen, sondern diese ist bei dem erfindungsgemäßen Kipp-Förderelement 1 sogar noch zu optimieren, so daß neben sämtlichen oben bereits angedeuteten und weiteren Vorteilen der vorliegenden Erfindung eine derart schonende Abgabe von Stückgutteilen 4 an den Abgabestationen 10 zu erreichen ist, wie sie bisher weder von den Herstellern noch auch von den Anwendern für möglich gehalten worden ist.

Es sei noch nachgetragen, daß zur besseren Verdeutlichung der Konstruktion und der Funktionsweise in Fig. 4 die Schwenkstellung bzgl. der Führungsnocken 39, 40 und ihrer Längsachsen 41 bzw. 42 mit strichpunktierten Linien angedeutet worden ist, wobei die entsprechenden Bezugszeichen jeweils mit einem "'" bezeichnet worden sind.

Durch die oben beschriebene begleitende Bewegung der Tragfläche 3 beim Abgeben eines Stückgutteils 4 und die dabei dem Stückgutteil 4 angeprägten Bewegungen bzw. Kräfte erfolgt zugleich auch noch eine Umlenkung der zunächst auf dem Kipp-Förderelement 1 in Förderrichtung 9 verlaufenden Längsachse des Stückgutteils 4, was insbesondere für längliche Stückgutteile höchst vorteilhaft ist, da diese hierdurch bereits bzgl. ihrer räumlichen Orientierung gedreht werden und demgemäß in günstiger Weise in die Aufnahmerichtung der Abgabestation gleichsam eingefädelt werden.

Trotz der ganz erheblichen Vorteile des beschriebenen Kipp-Förderelementes 1 gemäß der vorliegenden Erfindung ist dieses ersichtlich mit verhältnismäßig wenigen, einfachen und robusten Bauteilen realisierbar, wobei die Fertigungskosten eines derartigen Kipp-Förderelementes 1 gegenüber einer Ausgestaltung gemäß der DE-PS 36 02 861 um ca. 50 %(!) zu reduzieren sind und dabei - wie ausgeführt - nicht etwa irgendwelche Nachteile in Kauf genommen werden, sondern sogar noch vorteilhaftere Wirkungen zu erzielen sind, so daß insgesamt erfindungsgemäß ein Kipp-Förderelement geschaffen wurde, welches nicht nur den fördertechnischen Anforderungen - einschließlich extrem schonender Behandlung der Stückgutteile 4 - in hervorragender Weise Rechnung trägt, sondern insgesamt sowohl in technischer als auch in wirtschaftlicher Weise sämtlichen Anforderungen Rechnung trägt.

## Patentansprüche

1. Kipp-Förderelement für einen Stückgutförderer, dessen angetriebener Förderstrang aus einer Vielzahl von gelenkig miteinander verbundenen Förderelementen besteht, auf deren im Förderzustand im wesentlichen horizontaler Tragfläche jeweils wenigstens ein Stückgutteil anzuordnen ist, welches durch Kippen der Tragfläche wahlweise an einer von mehreren längs der Förderstrecke vorgesehenen Abgabestationen seitlich zur Förderrichtung abzugeben ist, mit einem die Tragfläche aufweisenden Tragelement, welches über eine Stützeinrichtung an einem längs einer Führung beweglichen Stützteil abgestützt ist, wobei das Tragelement mit einem fest an seiner Unterseite angeordneten, schräg nach unten gerichteten, drehbar gelagerten Lagerzapfen versehen und beim Kippen um die Längsachse des Lagerzapfens drehbar ist, der an einem Kippelement gelagert ist, welches seinerseits außerdem an einem von dem Stützteil hochstehenden Stützelement gelagert ist, dessen Längsachse abgewinkelt zur Längsachse des Lagerzapfens verläuft, und der beim Kippen des Tragelementes relativ zu dem Stützelement gesteuert schwenkbar ist, dadurch gekennzeichnet, daß die einander zugekehrten Endabschnitte des Lagerzapfens (15) und des Stützelementes (34) nur über das Kippelement (18) miteinander verbunden sind.

2. Kipp-Förderlement nach Anspruch 1, dadurch gekennzeichnet, daß das Stützteil (6) eine das Stützelement bildende Stützbuchse (34) aufweist, welche den unteren Endabschnitt (18") des Kippelementes (18) konzentrisch umgibt.

3. Kipp-Förderelement nach Anspruch 1 oder 2, dadurch gekennzeichnet, daß das Stützteil (6) in seitlicher Draufsicht im wesentlichen in Form eines E ausgebildet ist, dessen Steg um einen Winkel (α) zur Vertikalen gedreht ist, der gleich dem zwischen der Längsachse 16 des Lagerzapfens 15 und der Horizontalen eingeschlossenen Winkel (α) ist, wobei der Mittelschenkel (34) des Stützteils (6) die Lagerstelle für den unteren Endabschnitt (18") des Kippelementes (18) bildet, und die beiden Außenschenkel (35, 36) des Stützteils (6) jeweils mit dem Tragelement (2) verbunden sind.

4. Kipp-Förderelement nach Anspruch 2 und 3, dadurch gekennzeichnet, daß der die Lagerstelle für den unteren Endabschnitt (18") des Kippelementes (18) bildende Mittelschenkel des Stützteils (6) als Stützbuchse (34) ausgebildet ist.

5. Kipp-Förderelement nach Anspruch 3 oder 4, dadurch gekennzeichnet, daß die beiden Außenschenkel (35, 36) des Stützteils (6) zueinander fluchten, und daß die vertikale mittlere Symmetrieebene der beiden Außenschenkel (35, 36) des Stützteils (6) in der in Förderrichtung (9) verlaufenden vertikalen Symmetrieebene liegt.

6. Kipp-Förderelement nach Anspruch 5, dadurch gekennzeichnet, daß die beiden Außenschenkel (35, 36) des Stützteils (6) jeweils an ihrem oberen Endabschnitt eine Ausnehmung (37 bzw. 38) aufweisen, in welcher jeweils ein Führungsnocken (39 bzw. 40) der Stützeinrichtung (5) bzw. des Tragelementes (2) geführt ist.

7. Kipp-Förderelement nach Anspruch 6, dadurch gekennzeichnet, daß die Ausnehmungen (37 bzw. 38) der Außenschenkel (35 bzw. 36) des Stützteils (6) als Langlöcher ausgebildet sind, deren Längsachsen (41 bzw. 42) in der vertikalen Symmetrieebene liegen.

8. Kipp-Förderelement nach Anspruch 6 oder 7, insbesondere nach Anspruch 7, dadurch gekennzeichnet, daß die Führungsnocken (39 bzw. 40) als Rollen ausgebildet sind.

9. Kipp-Förderelement nach Anspruch 8, dadurch gekennzeichnet, daß die Führungsnocken (39 bzw. 40) einen elastischen Mantel aufweisen.

10. Kipp-Förderelement nach einem oder mehreren der Ansprüche 6 bis 9, dadurch gekennzeichnet, daß die Führungsnocken (39 bzw. 40) jeweils an einem Führungsnockenhalter (43 bzw. 44) angeordnet sind, der mit der Stützeinrichtung (5) bzw. dem Tragelement (2) verbunden ist; und daß die die Mittelachse der Führungsnocken (39 bzw. 40) bildenden Achsen (45 bzw. 46) der Führungsnocken (39, 40) zueinander fluchten.

11. Kipp-Förderelement nach Anspruch 10, dadurch gekennzeichnet, daß die Führungsnockenachsen (45, 46) in der vertikalen Symmetrieebene liegen.

12. Kipp-Förderelement nach Anspruch 10 oder 11, dadurch gekennzeichnet, daß die Führungsnockenhalter (43 bzw. 44) jeweils als Scheibe (43) bzw. als Buchse (44) ausgebildet und mit einem Befestigungsabschnitt (49) der Stützeinrichtung (5) bzw. des Tragelementes (2) bzw. einem Befestigungsabschnitt (50) des Stützteils (6) bzw. dessen Stützbuchse (34) befestigt sind.

13. Kipp-Förderelement nach einem oder mehreren der vorhergehenden Ansprüche, dadurch gekennzeichnet, daß das Kippelement (18) jeweils in Längsrichtung der beiden Längsachsen (16, 20) unbeweglich angeordnet ist.

14. Kipp-Förderelement nach einem oder mehreren der vorhergehenden Ansprüche, insbesondere nach Anspruch 13, dadurch gekennzeichnet, daß das Kippelement (18) als V-förmiger Rohrkörper ausgebildet ist, dessen einer Schenkel (18') konzentrisch zum Lagerzapfen (15) bzw. dessen Längsachse (16) angeordnet ist, und dessen anderer Schenkel (18") konzentrisch zur Längsachse (20) der Stützbuchse (34) verläuft.

15. Kipp-Förderelement nach Anspruch 14, dadurch gekennzeichnet, daß die beiden jeweils rechtwinklig zu der betreffenden Längsachse (16 bzw. 20) verlaufenden Stirnseiten (26' bzw. 26") des Kippelementes (18) jeweils einer im wesentlichen parallelen Fläche (28' bzw. 28") des Tragelementes (2) bzw. der Stützbuchse (34) gegenüberliegen.

16. Kipp-Förderelement nach einem oder mehreren der Ansprüche 13 bis 15, insbesondere nach Anspruch 15, dadurch gekennzeichnet, daß das Kippelement (18) jeweils zum Tragelement (2) und/oder zum Stützteil (6) bzw. dessen Stützbuchse (34) abgedichtet ist.

17. Kipp-Förderelement nach einem oder mehreren der vorhergehenden Anpsrüche, dadurch gekennzeichnet, daß das Kippelement (18) im Förderzustand mittels eines lösbaren Verriegelungsmittels am Stützteil (6) verriegelt ist, und daß das Verriegelungsmittel mittels eines an einer Abgabestation (10) angeordneten, gesteuert zu betätigenden Entriegelungsmittels zu entriegeln ist.

18. Kipp-Förderelement nach einem oder mehreren der vorhergehenden Ansprüche, insbesondere nach Anspruch 17, dadurch gekennzeichnet, daß das Kippelement (18) bei Betätigung durch ein an jeder Abgabestation (10) angeordnetes Betätigungsmittel gesteuert um die Längsachse (20) der Stützbuchse (34) zu drehen ist.

19. Kipp-Förderelement nach einem oder mehreren der vorhergehenden Ansprüche, dadurch gekennzeichnet, daß an dem Kippelement (18) wenigstens ein Hebel (30) angeordnet ist, der bei Betätigung durch ein Betätigungsmittel mit einer Abgabestation (10) unter Entriegelung des Entriegelungsmittels um seiner Anlenkstelle (31) zu schwenken ist und unter Drehung des Kippelementes (18) um die Längsachse (20) des buchsenförmigen Stützelementes (31) zu drehen ist.

20. Kipp-Förderelement nach Anspruch 19, dadurch gekennzeichnet, daß zwischen dem Hebel (30) und dem Kippelement (18) wenigstens eine Feder (51) angeordnet ist, die bei Auslenkung des Hebels (30) aus seiner Verriegelungsstellung (Fig. 3) eine Rückstellkraft auf den Hebel (30) ausübt.

21. Kipp-Förderelement nach Anspruch 20, dadurch gekennzeichnet, daß die Feder (51) als Schraubenfeder ausgebildet ist und mit ihren Endabschnitten jeweils an einem entsprechenden Ansatz (52) des Kippelementes (18) bzw. einem Ansatz (53) des Hebels (30) gehalten ist.

22. Kipp-Förderelement nach einem oder mehreren der vorhergehenden Ansprüche, dadurch gekennzeichnet, daß die Längsachse (16) des Lagerzapfens (15) so relativ zum Tragelement (2) angeordnet ist, daß sie in Richtung der Längssymmetrieachse (19) der Tragfläche (2) zur Quersymmetrieachse der Tragfläche (3) versetzt ist.

## Claims

1. A tilting and conveying element for a unit-load conveyor comprising a driven conveying line made up of a number of pivotably connected conveying elements having bearing surfaces which are substantially horizontal in the conveying state and on which at least one unit load is placed and is delivered by tilting the bearing surface towards a chosen one out of a number of delivery stations provided along the conveying path laterally of the conveying direction, the device comprising a bearing element which has the bearing surface and is mounted via a supporting means on a supporting part movable along a guide, the bearing element having a rotatably mounted pivot pin which extends downwards at an angle and is firmly connected to the underside of the bearing element, which is rotatable when tilted around the longitudinal axis of the pivot pin, which is mounted on a tilting element which in turn is mounted on a supporting element projecting upwards from the supporting part and having a longitudinal axis extending at an angle to the longitudinal axis of the pivot pin, and when the bearing element tilts, the pivot pin is pivotable in controlled manner relative to the supporting element, characterised in that the facing end portions of the pivot pin (15) and the supporting element (34) are connected only via the tilting element (18).

2. A tilting and conveying element according to claim 1, characterised in that the supporting part (6) has a supporting bush (34) constituting the supporting element and concentrically surrounding the bottom end portion (18'') of the tilting element (18).

3. A tilting and conveying element according to claim 1 or 2, characterised in that the supporting part (6) in lateral plan view has substantially the shape of an E having a web rotated relative to the vertical through an angle (α) equal to the angle (α) included between the horizontal and the longitudinal axis (16) of the pivot pin (15), the central limb (34) of the supporting part (6) forming the bearing for the bottom end portion (18'') of the tilting element (18), the two outer limbs (35, 36) of the supporting part (6) each being connected to the bearing element (2).

4. A tilting and conveying element according to claims 2 and 3, characterised in that the central limb of the supporting part (6) constituting the bearing for the bottom end portion (18'') of the tilting element (18) is in the form of a supporting bush (34).

5. A tilting and conveying element according to claim 3 or 4, characterised in that the two outer limbs (35, 36) of the supporting part (6) are in line, and the vertical central plane of symmetry of the two outer limbs (35, 36) of the supporting part (6) lies in the vertical plane of symmetry extending in the conveying direction (9).

6. A tilting and conveying element according to claim 5, characterised in that the two outer limbs (35, 36) of the supporting part (6) are each formed at their top end portion with a recess (37, 38) in which a guide cam (39, 40) of the supporting device (5) or the bearing element (2) is guided.

7. A tilting and conveying element according to claim 6, characterised in that the recesses (37, 38) in the outer limbs (35, 36) of the supporting part (6) are slots having longitudinal axes (41, 42) lying in the vertical plane of symmetry.

8. A tilting and conveying element according to claim 6 or 7, more particularly according to claim 7, characterised in that the guide cams (39, 40) are rollers.

9. A tilting and conveying element according to claim 8, characterised in that the guide cams (39, 40) have a resilient jacket.

10. A tilting and conveying element according to one or more of claims 6 to 9, characterised in that the guide cams (39, 40) are each disposed on a holder (43, 44) connected to the supporting device (5) or the bearing element (2), and the shafts (45, 46) embodying the central axes of the guide cams (39, 40) are in line.

11. A tilting and conveying element according to claim 10, characterised in that the guide-cam axes (45, 46) lie in the vertical plane of symmetry.

12. A tilting and conveying element according to claim 10 or 11, characterised in that the guide-cam holders (43, 44) are in the form of a disc (43) and a bush (44) respectively and are secured by a securing portion (49) of the supporting device (5) or of the supporting element (2) or by a securing portion (50) of the supporting part (6) or the bush (34) thereof.

13. A tilting and conveying element according to one or more of the preceding claims, characterised in that the tilting element (18) is disposed so as to be immovable in the longitudinal direction of the two longitudinal axes (16, 20).

14. A tilting and conveying element according to one or more of the preceding claims, particularly claim 13, characterised in that the tilting element (18) is a V-shaped tubular member having one limb (18') disposed concentrically with the pivot pin (18) or its longiudinal axis (16) whereas its other limb (18'') is concentric with the longitudinal axis (20) of the supporting sleeve (34).

15. A tilting and conveying element according to claim 14, characterised in that the two end faces (26', 26'') of the tilting element (18) extending at right angles to the respective longitudinal axis (16, 20) are each opposite a respective substantially parallel surface (28', 28'') of the bearing element (2) or the supporting bush (34).

16. A tilting and conveying element according to one or more of claims 13 to 15, particularly claim 15, characterised in that the tilting element (18) is sealed off from the bearing element (2) and/or the supporting part (6) or bush (34).

17. A tilting and conveying element according to one or more of the preceding claims, characterised in that the tilting element (18), when in the conveying state, is locked to the supporting part (6) by a releasable locking means, and the locking means can be unlocked by an unlocking means disposed on a delivery station (10) and actuated in controlled manner.

18. A tilting and conveying element according to one or more of the preceding claims, particularly claim 17, characterised in that the tilting element (18), when actuated by an actuating means disposed on each delivery station (10), is rotatable in controlled manner around the longitudinal axis (20) of the supporting sleeve (34).

19. A tilting and conveying element according to one or more of the preceding claims, characterised in that at least one lever (30) is disposed on the tilting element (18) and, when actuated by an actuating means at a delivery station (10), is pivotable around its pivot (31) while unlocking the unlocking means and is rotatable around the longitudinal axis (20) of the bush-like supporting element (31) while rotating the tilting element (18).

20. A tilting and conveying element according to claim 19, characterised in that at least one spring (51) is disposed between the lever (30) and the tilting element (18) and exerts a restoring force on the lever (30) when the lever (30) pivots out of its locking position (Fig. 3).

21. A tilting and conveying element according to claim 20, characterised in that the spring (51) is a helical spring and its end portions are each held against a corresponding projection (52) on the tilting element (18) or a projection (53) on the lever (30).

22. A tilting and conveying element according to one or more of the preceding claims, characterised in that the longitudinal axis (16) of the pivot pin (15) is disposed relative to the bearing element (2) so as to be offset in the direction of the longitudinal axis (19) of symmetry of the bearing surface (2) relative to the transverse axis of symmetry of the bearing surface (3).

## Revendications

1. Elément de convoyage basculant destiné à un convoyeur d'objets dont la chaîne de convoyage entraînée se compose d'une pluralité d'éléments de convoyage qui sont reliés les uns aux autres de manière articulée et sur chaque surface porteuse desquels, ladite surface porteuse étant sensiblement horizontale en position de convoyage, doit être placé au moins un objet qui doit être déchargé sélectivement, latéralement à la direction de convoyage, par le basculement de la surface porteuse à la hauteur de l'une de plusieurs stations de déchargement prévues le long de l'itinéraire de convoyage, comprenant un élément porteur qui est muni de la surface porteuse et qui repose, par l'intermédiaire d'un dispositif d'appui, sur une pièce d'appui qui se déplace le long d'un guide, l'élément porteur étant muni d'un tourillon qui est solidarisé à son côté inférieur, orienté en biais vers le bas et monté en rotation, et tournant lors du basculement autour de l'axe longitudinal du tourillon qui est fixé à un élément de basculement qui, pour sa part, est également fixé à un élément d'appui qui dépasse de la pièce d'appui vers le haut, dont l'axe longitudinal forme un angle avec celui du tourillon et qui peut pivoter de manière commandée lors du basculement de l'élément porteur par rapport à l'élément d'appui, caractérisé en ce que les parties extrêmes, tournées l'une vers l'autre, du tourillon (15) et de l'élément d'appui (34) ne sont reliées l'une à l'autre que par l'élément de basculement (18).

2. Elément de convoyage basculant selon la revendication 1, caractérisé en ce que la pièce d'appui (6) comporte une douille d'appui (34) qui forme l'élément d'appui et qui entoure de manière concentrique la partie extrême inférieure (18") de l'élément de basculement (18).

3. Elément de convoyage basculant selon la revendication 1 ou 2, caractérisé en ce que la pièce d'appui (6) présente, en vue latérale de dessus, sensiblement la forme d'un E dont le montant vertical est incliné, par rapport à la verticale, selon un angle ( ) qui est égal à l'angle ( ) compris entre l'axe longitudinal (16) du tourillon (15) et l'horizontale, la branche centrale (34) de la pièce d'appui (6) formant le point d'appui de la partie extrême inférieure (18") de l'élément de basculement (18), et les deux branches extérieures (35, 36) de la pièce d'appui (6) étant chacune reliées à l'élément porteur (2).

4. Elément de convoyage basculant selon la revendication 2 ou 3, caractérisé en ce que la branche centrale de la pièce d'appui (6), qui forme le point d'appui de la partie extrême inférieure (18") de l'élément de basculement (18), est conçue sous la forme d'une douille d'appui (34).

5. Elément de convoyage basculant selon la revendication 3 ou 4, caractérisé en ce que les deux branches extérieures (35, 36) de la pièce d'appui (6) sont alignées l'une avec l'autre, et en ce que le plan de symétrie vertical médian des deux branches extérieures (35, 36) de la pièce d'appui (6) se trouve dans le plan de symétrie vertical s'étendant dans la direction de convoyage (9).

6. Elément de convoyage basculant selon la revendication 5, caractérisé en ce que les deux branches extérieures (35, 36) de la pièce d'appui (6) comportent chacune, à leur partie extrême supérieure, un évidement (37 et, respectivement, 38), dans chacun desquels est guidée une came de guidage (39 et, respectivement, 40) du dispositif d'appui (5) et, respectivement, de l'élément porteur (2).

7. Elément de convoyage basculant selon la revendication 6, caractérisé en ce que les évidements (37 et, respectivement, 38) des branches extérieures (35 et, respectivement, 36) de la pièce d'appui (6) sont conçus sous la forme de trous oblongs dont l'axe longitudinal (41 et, respectivement, 42) se trouve dans le plan de symétrie vertical.

8. Elément de convoyage basculant selon la revendication 6 ou 7, en particulier selon la revendication 7, caractérisé en ce que les cames de guidage (39 et, respectivement, 40) se présentent sous la forme de galets.

9. Elément de convoyage basculant selon la revendication 8, caractérisé en ce que les cames de guidage (39 ou, respectivement, 40) sont garnies d'une gaine élastique.

10. Elément de convoyage basculant selon une ou plusieurs des revendications 6 à 9, caractérisé en ce que les cames de guidage (39 et, respectivement, 40) sont chacune montées sur un porte-came de guidage (43 et, respectivement, 44) qui est solidarisé au dispositif d'appui (5) et, respectivement, à l'élément porteur (2), et en ce que les axes (45 et, respectivement, 46) des cames de guidage (39, 40), qui forment l'axe médian des cames de guidage (39 et, respectivement, 40), sont alignés l'un avec l'autre.

11. Elément de convoyage basculant selon la revendication 10, caractérisé en ce que les axes (45, 46) des cames de guidage se trouvent dans le plan de symétrie vertical.

12. Elément de convoyage basculant selon la revendication 10 ou 11, caractérisé en ce que les porte-came de guidage (43 et, respectivement, 44) sont conçus sous la forme d'un disque (43) et, respectivement, d'une douille (44) et sont fixés à une partie de fixation (49) du dispositif d'appui (5) et, respectivement, de l'élément porteur (2), et, respectivement, à une partie de fixation (50) de la pièce d'appui (6) et, respectivement, de sa douille d'appui (34).

13. Elément de convoyage basculant selon une ou plusieurs des revendications précédentes, caractérisé en ce que l'élément de basculement (18) est monté fixe dans le sens longitudinal des deux axes longitudinaux (16, 20).

14. Elément de convoyage basculant selon une ou plusieurs des revendications précédentes, en particulier selon la revendication 13, caractérisé en ce que l'élément de basculement (18) est conçu sous la forme d'un corps tubulaire en V, dont l'une des branches (18') est concentrique au tourillon (15) et, respectivement, à l'axe longitudinal (16) de ce dernier, et dont l'autre branche (18") est concentrique à l'axe longitudinal (20) de la douille d'appui (34).

15. Elément de convoyage basculant selon la revendication 14, caractérisé en ce que les deux faces frontales (26' et 26") de l'élément de basculement (18), lesdites faces frontales étant chacune perpendiculaires à l'axe longitudinal correspondant (16 et, respectivement, 20), font respectivement face à une surface sensiblement parallèle (28' et, respectivement, 28") de l'élément porteur (2) et, respectivement, de la douille d'appui (34).

16. Elément de convoyage basculant selon une ou plusieurs des revendications 13 à 15, en particulier selon la revendication 15, caractérisé en ce que l'élément de basculement (18) est étanché par rapport à l'élément porteur (2) et/ou par rapport à la pièce d'appui (6) et, respectivement, par rapport à la douille d'appui (34) de cette dernière.

17. Elément de convoyage basculant selon une ou plusieurs des revendications précédentes, caractérisé en ce que, en position de convoyage, l'élément de basculement (18) est bloqué sur la pièce d'appui (6) à l'aide d'un moyen de verrouillage déblocable, et en ce que le moyen de verrouillage peut être déverrouillé à l'aide d'un moyen de déverrouillage qui peut être actionné de manière commandée dans une station de déchargement (10).

18. Elément de convoyage basculant selon une ou plusieurs des revendications précédentes, en particulier selon la revendication 17, caractérisé en ce que, lorsqu'il est actionné par un moyen d'actionnement prévu dans chaque station de déchargement (10), l'élément de basculement (18) tourne de manière commandée autour de l'axe longitudinal (20) de la douille d'appui (34).

19. Elément de convoyage basculant selon une ou plusieurs des revendications précédentes, caractérisé en ce que, sur l'élément de basculement (18), est monté au moins un levier (30) qui, lorsqu'il est actionné par un moyen d'actionnement implanté dans une station de déchargement (10), peut pivoter autour de son point d'articulation (31) en déverrouillant le moyen de déverrouillage et peut tourner autour de l'axe longitudinal (20) de l'élément d'appui (31) en forme de douille en faisant tourner l'élément de basculement (18).

20. Elément de convoyage basculant selon la revendication (19), caractérisé en ce que, entre le levier (30) et l'élément de basculement (18) est disposé au moins un ressort (51) qui exerce une force de rappel sur le levier (30) lorsque celui-ci quitte sa position verrouillée (figure 3).

21. Elément de convoyage basculant selon la revendication 20, caractérisé en ce que le ressort (51) est conçu sous la forme d'un ressort hélicoïdal et est fixé par ses parties extrêmes à une patte (52) de l'élément de basculement (18) et, respectivement, à une patte (53) du levier (30).

22. Elément de convoyage basculant selon une ou plusieurs des revendications précédentes, caractérisé en ce que, par rapport à l'élément porteur (2), l'axe longitudinal (16) du tourillon (15) est placé de façon à être déporté, dans le sens de l'axe de symétrie longitudinale (19) de la surface porteuse (2), par rapport à l'axe de symétrie transversale de la surface porteuse (3).
